# FASCICULE DE BREVET EUROPEEN

(11) **EP 3 772 818 B1**
(45) Date de publication et mention de la délivrance du brevet: **08.10.2025**
(21) Numéro de dépôt: 20190144.4
(22) Date de dépôt: 07.08.2020
(51) Int. Cl.: H02S 20/32

(54) **SYSTÈME DE PANNEAUX PHOTOVOLTAIQUES ET UNE OMBRIÈRE PHOTOVOLTAIQUE COMPRENANT LEDIT SYSTÈME**
FOTOVOLTAIKPANEEL-SYSTEM UND EINE FOTOVOLTAIK-BESCHATTUNG, DIE EIN SOLCHES SYSTEM UMFASST
SYSTEM OF PHOTOVOLTAIC PANELS AND A PHOTOVOLTAIC CANOPY COMPRISING SAID SYSTEM

(30) Priorité: 09.08.2019 FR 1909111
(43) Date de publication de la demande: 10.02.2021
(73) Titulaire: TSE, 06560 Sophia Antipolis (FR)
(72) Inventeur: DEBONNET, Mathieu, 06220 Vallauris (FR); BURTIN, Denis, 38210 Vourey (FR)
(74) Mandataire: Murgitroyd & Company

(56) Documents cités:
- DE-A1- 102008 059 858
- US-A1- 2016 065 116
- US-A1- 2018 019 702
- APPELBAUM J ED - LI BAIZHAN ET AL: "Bifacial photovoltaic panels field", RENEWABLE ENERGY, vol. 85, 3 July 2015 (2015-07-03), pages 338 - 343, XP029291181, ISSN: 0960-1481, DOI: 10.1016/J.RENENE.2015.06.050

## Description

### Domaine de l'invention

L'invention concerne un système de panneaux photovoltaïques fixés au-dessus d'un support, selon une inclinaison déterminée par rapport au support, ledit système comprenant des poteaux de support fixés sur le support, des câbles suspendus entre les poteaux du support et des moyens de fixation pour fixer des panneaux photovoltaïques aux câbles.

Le système de panneaux photovoltaïques selon l'invention est adapté pour libérer l'espace au-dessous desdits panneaux photovoltaïques, ledit espace pouvant de ce fait être utilisé, par exemple, pour des activités agricoles.

### Etat de la technique

L'utilisation de systèmes comprenant des panneaux photovoltaïques, disposés au-dessus d'un support selon une inclinaison déterminée par rapport audit support, a déjà été divulguée dans l'art antérieur. Plusieurs systèmes de ce type, pourvus de panneaux photovoltaïques, sont actuellement utilisés lors de créations de centrales photovoltaïques adaptées à la production d'électricité.

En règle générale, pour créer une centrale photovoltaïque, des panneaux photovoltaïques sont fixés sur des structures positionnées sur le sol, lesdits panneaux photovoltaïques demeurant près du sol. Ce type d'installation permet d'accéder aisément aux panneaux photovoltaïques pour leur entretien et leur éventuel remplacement en cas de besoin.

Dans l'art antérieur, des systèmes pourvus de panneaux photovoltaïques sont connus, lesdits panneaux photovoltaïques étant fixés sur une structure, à une distance déterminée par rapport au sol. Ces systèmes présentent l'avantage de libérer la surface du sol et permettre l'utilisation de la surface présente au-dessous desdits panneaux photovoltaïques dans un but autre que la production d'énergie électrique. A titre d'exemple, le fait de positionner des panneaux photovoltaïques au-dessus des parkings destinés aux véhicules est déjà connu dans l'art antérieur. Ceci présente l'avantage de permettre l'utilisation de l'espace pour deux objectifs distincts, d'une part garer les véhicules et, d'autre part produire de l'énergie électrique grâce aux panneaux photovoltaïques installés au-dessus des véhicules.

Les systèmes divulgués dans l'art antérieur présentent des inconvénients. En effet, les structures nécessaires à la fixation des panneaux photovoltaïques à une distance déterminée par rapport au sol sont relativement encombrantes. Ces systèmes utilisent une quantité importante de poteaux nécessaires pour supporter l'installation des panneaux photovoltaïques, ce qui limite les possibilités d'utilisation de l'espace situé au-dessous desdits panneaux. Dans le cas des parkings dédiés aux véhicules, la présence des poteaux est acceptable car ceux-ci délimitent des places individuelles sur lesdits parkings. En revanche, une telle quantité de poteaux représente un inconvénient dans le cas où l'utilisateur souhaite utiliser l'espace situé au-dessous des panneaux photovoltaïques pour des activités agricoles.

Les systèmes utilisant des panneaux photovoltaïques connus dans l'art antérieur présentent un autre inconvénient. En effet, les structures soutenant les panneaux photovoltaïques se situent à une distance déterminée par rapport au sol et ces systèmes sont souvent relativement onéreux.

Pour des raisons d'efficacité et de réduction des coûts, il existe un besoin de proposer de nouvelles solutions permettant de disposer de l'espace situé au-dessous des panneaux photovoltaïques. Un premier objectif de la présente invention consiste à fournir un système pourvu de panneaux photovoltaïques permettant de libérer l'espace situé au-dessous de l'installation desdits panneaux photovoltaïques pour certaines activités comme, par exemple, des activités agricoles.

Un second objectif de la présente invention consiste à fournir un système pourvu de panneaux photovoltaïques dont l'installation engendre des frais relativement maîtrisés.

Le document DE102008059858 A1 divulgue un système de panneaux photovoltaïques connu dans lequel les panneaux sont soutenus par un câble autour duquel leur position peut être ajustée en rotation.

### Objet de l'invention

En considération des observations ci-dessus, l'objet de la présente invention concerne un système de panneaux photovoltaïques tel que défini dans la revendication 1.

Les revendications dépendantes correspondent à des options possibles pour certains modes de réalisation de l'invention.

### Brève description des dessins

Les but, objet et caractéristiques de l'invention apparaîtront plus clairement à la lecture de la description qui suit faite en référence aux figures dans lesquelles :
Fig. 1 montre une vue schématique d'un système de panneaux photovoltaïques selon l'invention, installé dans un champ,
Fig. 2 représente une vue détaillée d'un poteau de support d'un système de panneaux photovoltaïques selon la figure 1,
Fig. 3 illustre un mode de réalisation d'une fixation d'un élément de support sur un câble porteur à l'aide d'un élément de fixation,
Fig. 4 montre un deuxième mode de réalisation d'un système de panneaux photovoltaïques selon l'invention,
Fig. 5 représente une vue détaillée d'un élément de fixation sur la première extrémité d'un élément de support,
Fig. 6 montre une vue détaillée d'un élément de fixation sur la deuxième extrémité d'un élément de support,
Fig. 7a - Fig. 7b - Fig. 7c - Fig. 7d - Fig. 7e - Fig. 7f illustrent les différents modes de réalisation des éléments de fixation permettant de fixer les extrémités des éléments de support sur des câbles porteurs,
Fig. 8 montre, de façon schématique, l'optimisation de la performance à obtenir grâce aux panneaux photovoltaïques en contrôlant la distance entre des rangées de panneaux photovoltaïques adjacentes,
Fig. 9 représente un ensemble de système de panneaux photovoltaïques selon la figure 4, et
Fig. 10 illustre un ensemble de panneaux photovoltaïques selon la figure 4, en alternance avec un autre système de panneaux photovoltaïques permettant d'obtenir une distance alternative entre le bord du système et la première rangée de panneaux photovoltaïques.

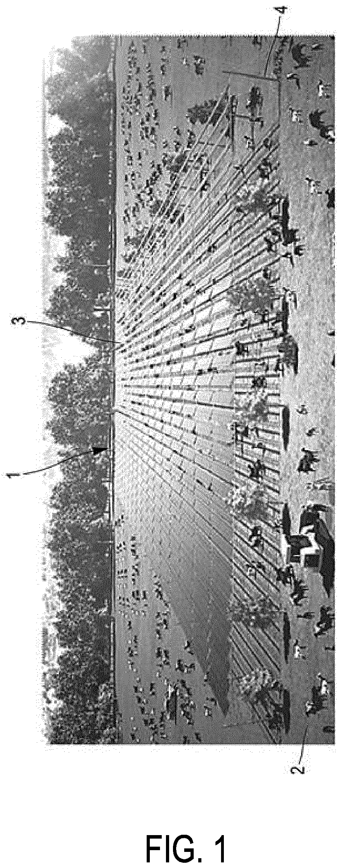

La figure 1 montre une vue schématique d'un système de panneaux photovoltaïques 1 selon l'invention. Ledit système de panneaux photovoltaïques 1 est positionné sur le sol 2, dans un champ, ledit sol 2 formant le support dudit système de panneaux photovoltaïques 1. Comme illustré sur la figure 1, le système de panneaux photovoltaïques 1 comprend une pluralité de panneaux photovoltaïques 3 disposés au-dessus du sol 2, selon une inclinaison déterminée par rapport audit sol 2.

Selon l'exemple illustré sur la figure 1, les panneaux photovoltaïques 3 sont positionnés à une distance déterminée par rapport au sol 2 afin de permettre l'utilisation du sol pour une activité agricole. Selon cet exemple, le sol sert à accueillir des troupeaux de bétail pouvant paître librement sous lesdits panneaux photovoltaïques 3. Selon le même exemple, les panneaux photovoltaïques 3 permettent l'utilisation du sol 2 au-dessous des panneaux photovoltaïques car ils sont positionnés à une distance déterminée par rapport au sol 2, ladite distance étant comprise entre 2 et 10 mètres, de préférence entre 3 et 8 mètres, avec plus de préférence entre 5 et 7,5 mètres. Les panneaux photovoltaïques 3 étant positionnés au-dessus du sol 2 selon une telle distance, cela permet une libre circulation des agriculteurs et de leurs machines agricoles ainsi que le travail de la terre au-dessous desdits panneaux photovoltaïques 3.

Il est évidemment possible d'envisager d'autres utilisations agricoles. En effet, à titre d'exemple, l'espace disponible sous les panneaux photovoltaïques 3 peut être utilisé pour la culture de toute végétation, par exemple des arbres fruitiers, des légumes ou encore des fleurs.

La présence des panneaux photovoltaïques 3 permet aux agriculteurs de considérer l'utilisation du sol 2 comme une première source de revenus. Le système pourvu de panneaux photovoltaïques 3 permet aux agriculteurs de disposer d'une deuxième source de revenus grâce à la production de l'énergie électrique générés par ledit système 1. En effet, Les agriculteurs peuvent louer leur(s) terrain(s) à un opérateur d'ombrières photovoltaïques comprenant des systèmes 1 pourvu de panneaux photovoltaïques 3 selon l'invention.

Un aspect important de l'invention réside dans la présence des panneaux photovoltaïques 3 situés au-dessus du sol 2 qui offre aux agriculteurs la possibilité d'optimiser l'utilisation dudit sol 2. A titre d'exemple, la présence des panneaux photovoltaïques 3 peut créer des zones ombragées permettant de protéger la végétation cultivée au-dessous desdits panneaux photovoltaïques 3. Ces zones ombragées assurent non seulement la protection contre un rayonnement direct du soleil mais également contre de fortes précipitations, sous forme de grêle par exemple. L'inclinaison des panneaux photovoltaïques 3 permet d'ajuster la quantité de rayonnement solaire sur la végétation en culture au-dessous desdits panneaux photovoltaïques 3 donc de réguler le degré de la protection assurée par lesdits panneaux photovoltaïques 3.

Par ailleurs, la présence d'un système 1 pourvu de panneaux photovoltaïques 3 selon l'invention permet aux agriculteurs d'assurer, au-dessous desdits panneaux photovoltaïques 3, des conditions de culture agricole optimales. En effet, à titre d'exemple, un système d'arrosage et/ou de brumisation peut être intégré au sein du système 1 pourvu de panneaux photovoltaïques 3, permettant ainsi à la végétation ou aux cultures agricoles de recevoir un arrosage et/ou une brumisation adaptés. La présence des panneaux photovoltaïques 3 permet d'éviter une évaporation trop rapide de l'eau ainsi dirigée vers le sol 2.

Pour compléter l'utilisation du système 1 pourvu de panneaux photovoltaïques 3 selon l'invention, et ce à des fins agricoles, il est possible d'intégrer, aux extrémités dudit système 1, un écran adapté pour recouvrir au moins une partie de la surface délimitée par l'ensemble des poteaux 4 formant le support du système 1 pourvu de panneaux photovoltaïques 3. Un écran de ce type (non montré sur la figure 1), peut être fourni sous la forme de filets. Le but de l'utilisation d'un tel écran consiste à renforcer l'effet de serre obtenu avec le système 1. Une autre alternative d'écran peut être réalisée en plantant des arbres de densité optimale, obturant ainsi au moins une partie de l'espace situé entre les poteaux 4. Le périmètre du système 1 pourvu de panneaux photovoltaïques 3 selon la figure 1 peut, par exemple, être partiellement fermé grâce à des plantations de conifères.

Le système 1 pourvu de panneaux photovoltaïques 3 peut s'avérer utile pour récupérer et réutiliser de l'eau de pluie en l'équipant de gouttières (non montrées sur la figure 1) adaptées pour collecter et amener ladite eau de pluie vers des points de récolte telle qu'une citerne. L'eau de pluie ainsi récoltée et stockée dans ladite citerne pourrait alimenter des systèmes d'arrosage et assurer ainsi l'arrosage de la végétation ou des cultures présentes sous les panneaux photovoltaïques 3. Un tel système d'arrosage pourrait se présenter sous la forme d'un goutte-à-goutte au pied desdites cultures.

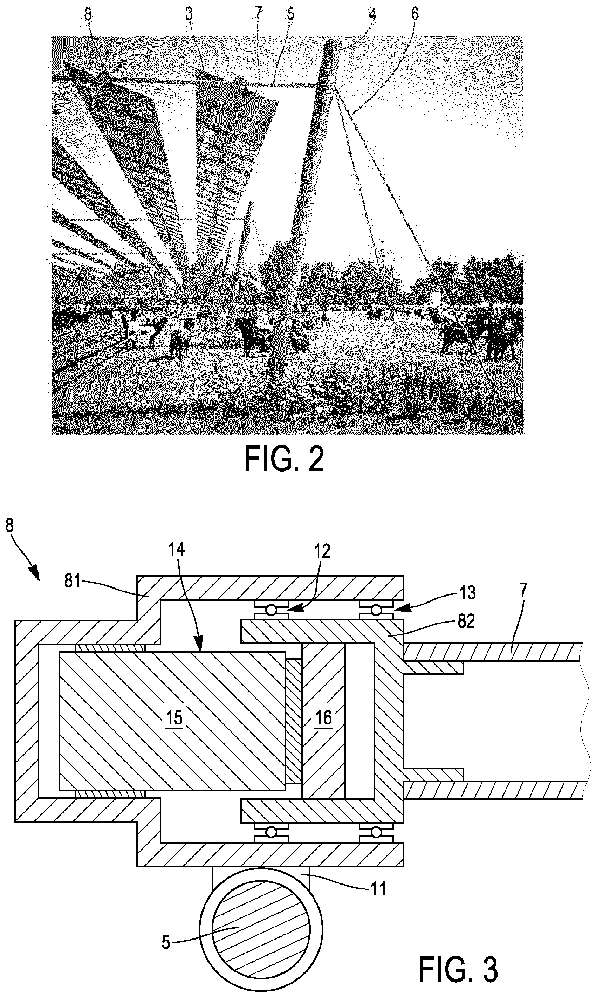

La figure 2 montre une vue détaillée du système 1 pourvu de panneaux photovoltaïques 3 selon la figure 1, et notamment la fixation desdits panneaux photovoltaïques 3 à une distance déterminée par rapport au sol 2.

Le système 1 pourvu de panneaux photovoltaïques 3 comprend tout d'abord des poteaux de support 4 fixés sur le sol 2. Ces poteaux de support 4 peuvent se présenter sous la forme de tubes, de profilés ou toute autre forme adaptée. La figure 2 représente uniquement la partie du poteau de support 4 qui sort du sol 2. Le poteau 4 est pourvu d'un ancrage dans le sol 2, par exemple en forme d'un poids mort tel qu'un bloc de béton. Le poteau de support 4 peut être réalisé dans tout matériau adapté, tel que de l'acier, de l'aluminium ou un matériau composite.

En référence aux figures 1 et 2, l'on peut constater que des câbles porteurs 5 sont suspendus entre deux poteaux de support 4 opposés. Les câbles porteurs 5 sont utilisés pour fixer des panneaux photovoltaïques 3. Pour compléter l'installation, le système 1 pourvu de panneaux photovoltaïques 3 est pourvu de câbles additionnels 6, fixés à la hauteur des câbles porteurs 5 et prévus pour éviter une déformation des poteaux de support 4 lors de l'utilisation du système 1 pourvu de panneaux photovoltaïques 3.

Comme illustré sur la figure 2, les panneaux photovoltaïques 3 sont fixés à l'aide d'éléments de support 7 eux-mêmes fixés sur les câbles porteurs 5. Les éléments de support 7 se présentent, typiquement, sous la forme de poutres ou de tubes. Les panneaux photovoltaïques 3 sont fixés sur les éléments de support 7 afin de former des rangées de panneaux photovoltaïques 3. Selon l'exemple illustré sur la figure 2, une rangée de panneaux photovoltaïques 3 comprend 10 panneaux photovoltaïques 3. Une telle rangée peut comporter toute autre quantité de panneaux photovoltaïques 3, et ce en fonction des besoins.

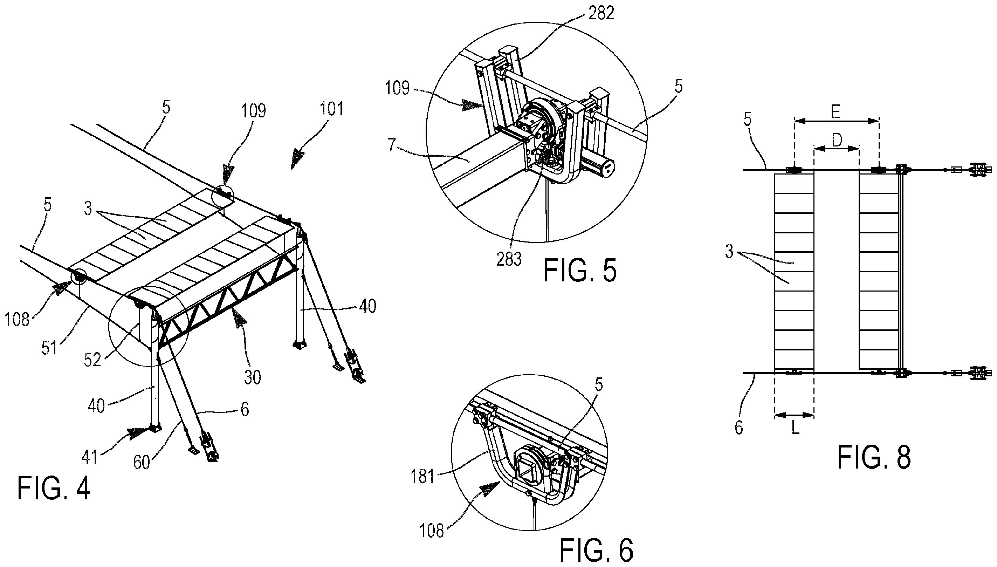

Les éléments de support 7 sont fixés sur les câbles porteurs 5 à l'aide d'éléments de fixation 8. Un mode de réalisation de tels éléments de fixation est montré sur la figure 3. La figure 3 représente un exemple d'un élément de fixation sous forme de boîtier 8 permettant de fixer un élément porteur de support 7 sur le câble porteur 5. Bien évidemment, l'exemple illustré sur la figure 3 n'est pas limitatif, d'autres types d'élément de fixation sont donc envisageables. Les figures 5, 6 et 7 illustrent d'autres éléments de fixations adaptés au système selon l'invention. L'élément de fixation 8 comprend une première partie 81 fixée sur le câble 5 à l'aide d'un élément de fixation 11 et ne peut effectuer aucun mouvement par rapport audit câble 5. A l'intérieur de la première partie 81, le boîtier 8 comprend une deuxième partie 82 pouvant effectuer une rotation par rapport à ladite première partie 81. Un élément tournant 12 et un élément tournant 13, présents entre la première partie 81 et la deuxième partie 82 de l'élément de fixation 8, permettent ladite rotation de la deuxième partie 82 par rapport à la première partie 81 dudit élément de fixation 8. L'élément de fixation 8 comprend un moteur électrique 14 en forme de tube dont le corps 15 est fixé à l'intérieur de la première partie 81 dudit élément de fixation 8. Le moteur électrique 14 comprend une tête 16 capable d'effectuer une rotation par rapport au corps 15 dudit moteur électrique 14 et fixée à l'intérieur de la deuxième partie 82 de l'élément de fixation 8. Comme illustré sur la figure 3, la deuxième partie 82 dudit élément de fixation 8 forme un « siège » pour l'extrémité d'un élément de support 7. Avec l'élément de fixation 8 tel que montré sur la figure 3, l'élément de support 7 est capable d'effectuer un mouvement rotatif sur lui-même par rapport au câble 5 à l'aide du moteur électrique 14.

La fixation des éléments de support 7 sur les câbles porteurs 5 est adaptée pour permettre auxdits éléments de support 7 d'être mobiles en rotation par rapport auxdits câbles porteurs 5. Le fait que les panneaux photovoltaïques 3 soient fixés sur les câbles porteurs 5 à l'aide des éléments de support 7, eux-mêmes mobiles en rotation par rapport auxdits câbles porteurs 5, permet de modifier l'inclinaison desdits panneaux photovoltaïques 3 par rapport au sol 2 grâce à la rotation des éléments de support 7 par rapport aux câbles porteurs 5.

Pour permettre aux éléments de support 7 d'effectuer une rotation par rapport aux câbles porteurs 5, le système 1 pourvu de panneaux photovoltaïques 3 est tout d'abord pourvu de moyens d'entraînement. Lesdits moyens d'entraînement sont, par exemple, pourvus de moteurs électriques présents à l'intérieur des éléments de support 7 et sont connectés à un dispositif de contrôle adapté pour contrôler lesdits moyens d'entraînement et modifier l'inclinaison des panneaux photovoltaïques 3 par rapport au sol 2 si besoin et de façon optimale. Cela signifie que les panneaux photovoltaïques 3 peuvent être orientés, par exemple au cours de la journée, afin d'optimiser leur rendement et augmenter la production d'énergie électrique.

De préférence, le dispositif de contrôle du système 1 pourvu de panneaux photovoltaïques 3 selon l'invention comprend un ordinateur. L'ordinateur permet de recevoir des instructions visant à manipuler les tubes de support 7, optimisant ainsi l'inclinaison des panneaux photovoltaïques 3 en prenant en considération la position du soleil en fonction de la saison dans l'année et de l'heure dans la journée. De plus, le dispositif de contrôle peut être complété à l'aide d'un module météorologique muni d'au moins un capteur capable de collecter des paramètres météorologiques. Un module de ce type peut transmettre des données météorologiques à l'ordinateur afin de définir des positions optimales pour les panneaux photovoltaïques 3, par exemple des données relatives aux prévisions de précipitations, d'humidité de l'air, d'exposition solaire, etc.

Les panneaux photovoltaïques 3 peuvent être réalisés en « double-face » afin d'augmenter leur rendement, leur première face pouvant être orientée essentiellement en direction du soleil et leur deuxième face pouvant être orientée à l'opposé. L'utilisation de ce type de panneaux photovoltaïques 3 « double-face » permet d'augmenter significativement le rendement du système 1 pourvu de ce type de panneaux photovoltaïques 3.

Afin d'augmenter la production d'énergie électrique avec les panneaux photovoltaïques « double face » 3, le sol 2 peut être revêtu d'un matériau permettant d'augmenter la réflexion du rayonnement solaire.

Selon l'exemple illustré sur les figures 1 et 2, un revêtement de ce type peut être réalisé avec des fleurs à pétales blanches, des cailloux de couleur blanche, des abreuvoirs remplis d'eau pour le bétail ou des réservoirs pour stocker de l'eau de pluie, ouverts pour profiter de la réflexion du soleil sur la surface de l'eau. Bien évidemment, d'autres types de revêtements sont disponibles pour augmenter la réflexion du rayonnement solaire sur le sol 2.

En faisant référence aux figures 1 et 2, il convient de constater que le système 1 pourvu de panneaux photovoltaïques 3 est adapté pour recouvrir une surface relativement étendue avec une quantité réduite d'obstacles présents sur le sol 2. Entre les poteaux de support 4 opposés, les câbles fournissent une longue portée pour fixer des éléments de support 7. Il est possible de suspendre des câbles porteurs 5 sur une distance jusqu'à 50 mètres. Une pluralité de poteaux de support 4 peuvent être positionnés les uns à côté des autres afin de former une longueur d'environ 50 mètres jusqu'à 1000 mètres, par exemple 200 mètres, pour le système 1 pourvu de panneaux photovoltaïques 3. Ainsi, un système 1 pourvu de panneaux photovoltaïques 3 représente une surface d'environ un à 20 hectares et forme un module. Un ou plusieurs modules de ce type peuvent être utilisés pour réaliser une ombrière photovoltaïque complète.

La figure 4 illustre un deuxième mode de réalisation du système de panneaux photovoltaïques selon l'invention. Le numéro de référence 101, dans la figure 4, est utilisé afin de faire référence audit système de panneaux photovoltaïques. Le système de panneaux photovoltaïques 101 selon la figure 4 comprend des poteaux 40, essentiellement positionnés de façon verticale, représentant uniquement deux poteaux 40. Cependant, en faisant référence aux figures 1 et 2, il est évident que ledit système 101 comprend une pluralité de poteaux 40 adaptés pour maintenir des câbles porteurs 5 à une hauteur déterminée par rapport aux supports sur lesquels lesdits poteaux 40 sont positionnés. Le poteau 40, représenté sur la figure 4, comprend un pied 41 fixé au reste du poteau 40 à l'aide d'une charnière (non visible sur la figure 4). Le pied 41 peut être positionné sur le sol ou partiellement enfoncé dans le sol. Le poteau 40, étant articulé par rapport au pied 41, permet un assemblage plus aisé du système de panneaux photovoltaïques 101 selon l'invention. Les extrémités supérieures des poteaux 40 adjacents sont connectées à l'aide d'une structure 30, laquelle structure 30 ayant pour but d'assurer un maintien plus rigide au système de panneaux photovoltaïques 101. Des câbles porteurs 5, fixés à proximité des extrémités supérieures des poteaux 40, ont pour but de maintenir des éléments de support (non visibles sur la figure 4) sur lesquels les panneaux photovoltaïques 3 sont positionnés. La fonctionnalité des éléments de support est similaire à celle des éléments de support 7 décrits en faisant référence aux figures 1 et 2. Les éléments de support, selon la figure 4, sont fixés aux câbles porteurs 5 grâce à des éléments de fixation 108, 109, illustrés de façon détaillée sur les figures 5 et 6. Selon l'exemple représenté sur les figures 4, 5 et 6, les éléments de fixation 108, 109 se présentent sous la forme de « berceaux » permettant de fixer l'extrémité de l'élément de support 7 aux câbles porteurs 5.

La figure 4 représente le système de panneaux photovoltaïques 101 comprenant des câbles tendeurs 51. Lesdits câbles tendeurs 51 s'étendent de façon essentiellement parallèle par rapport aux câbles porteurs 5. Les extrémités desdits câbles tendeurs 51 sont fixées aux poteaux 40 au-dessous de la fixation située entre le poteau 40 et le câble porteur 5. Comme illustré sur la figure 4, les éléments de fixation 108, 109 sont respectivement connectés aux câbles tendeurs 51 à l'aide d'un raidisseur 52 ayant la forme d'un petit câble.

La présence des câbles tendeurs 51 ainsi que la connexion entre les éléments de fixation 108, 109 et les câbles tendeurs 51 à l'aide d'un raidisseur 52 permet d'obtenir une structure plus rigide. Par ailleurs, la présence du raidisseur 52 au niveau des éléments de fixation 108, 109, augmentant la rigidité de la structure, permet de faciliter la rotation des panneaux photovoltaïques 3 par rapport au reste de ladite structure.

La figure 4 montre la partie supérieure des poteaux 40 connectée au sol à l'aide des câbles additionnels 60. Cette fixation est comparable à la fixation des câbles 6, telle que celle-ci est représentée sur les figures 1 et 2. Les câbles additionnels 60 s'étendent de façon essentiellement parallèle aux câbles 6 et dans la continuité des câbles tendeurs 51. La présence des câbles additionnels 60 permet d'accentuer la rigidité de la structure du système de panneaux photovoltaïques 101.

La figure 5 représente l'élément de fixation 109, lequel comprend un premier élément 282, essentiellement sous la forme d'un « U ». Ce premier élément 282 est fixé au câble porteur 5. Le deuxième élément 283, fixé à l'extrémité de l'élément de support 7, est mobile en rotation par rapport au premier élément 282. Des éléments d'entraînement, sous forme de moteur électrique, sont situés entre le premier élément 282 et la deuxième partie 283 et permettent de faire pivoter l'élément de support 7 par rapport aux câbles porteurs 5.

La figure 6 illustre l'élément de fixation 108 qui comprend un premier élément 181 se présentant sous la forme d'un « U » et un deuxième élément, mobile en rotation par rapport audit premier élément 181, permettant à l'élément de support 7 de pivoter par rapport audit premier élément 181. Selon le mode de réalisation illustré sur la figure 6, l'élément de fixation 108 n'est pas pourvu d'éléments d'entraînement. La première extrémité, représentée sur la figure 5, comprenant des éléments d'entraînement (comme montré sur l'exemple illustré sur les figures 5 et 6) suffit à faire pivoter l'élément de support 7 autour de son axe longitudinal. L'élément de fixation 108 permet à la deuxième extrémité de l'élément de support 7 de suivre librement la rotation imposée par les éléments d'entraînement présents au sein de l'élément de fixation 109.

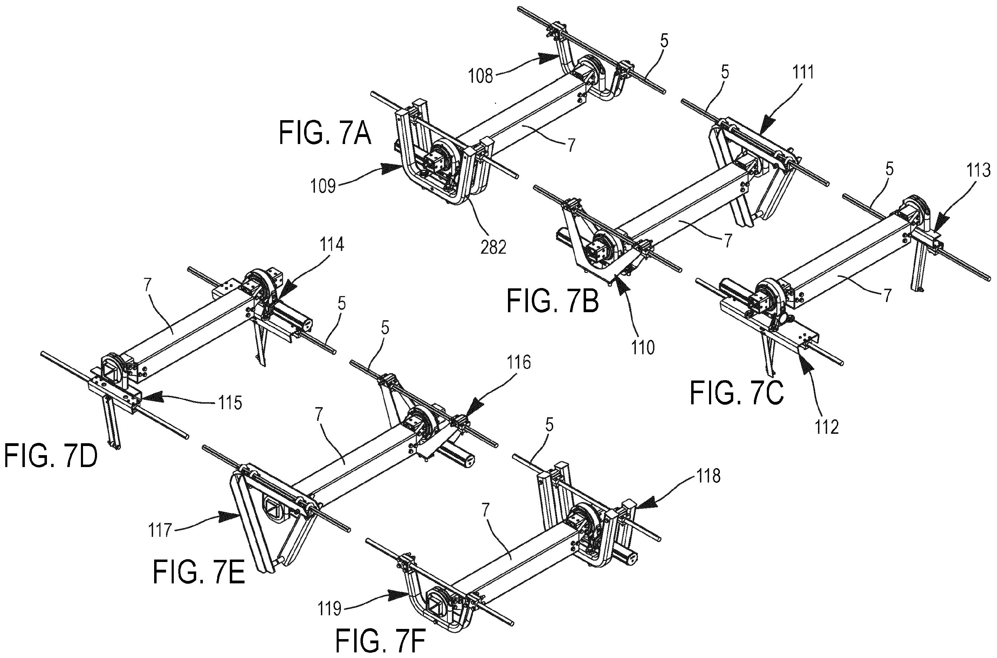

Les figures 7a, 7b, 7c, 7d, 7e et 7f montrent respectivement les éléments de fixation 108, 109, tels que représentés sur les figures 5 et 6 ainsi que les éléments de fixation 110, 111, 112, 113, 114, 115, 116, 117, 118 et 119.

Les éléments de fixation 108, 109, 110, 111, 116, 117, 118 et 119 sont adaptés pour fixer l'élément de support 7 dans une position située au-dessous du câble porteur 5. Cela signifie que les éléments de fixation susmentionnés permettent à l'élément de support 7 de « pendre » au-dessous du câble porteur 5. Ce type d'élément de fixation permet une fixation relativement simple des extrémités des éléments de support 7 aux câbles porteurs 5.

De façon alternative, les éléments de fixation 112, 113, 114, 115 permettent une fixation des éléments de support 7 au-dessus des câbles porteurs 5. Cette solution alternative présente l'avantage de situer les panneaux photovoltaïques 3, une fois fixés sur les éléments de support 7, au-dessus des câbles porteurs 5 et non pas dans l'ombre desdits câbles porteurs 5. Cette solution présente l'avantage d'une meilleure efficacité desdits panneaux photovoltaïques 3.

La figure 8 illustre, de façon schématique, une installation optimale des panneaux photovoltaïques 3, de manière adjacente. Selon la figure 8, chaque panneau photovoltaïque 3 présente une longueur « L ». Les axes de rotation, c'est-à-dire les éléments de fixation pour des rangées adjacentes, sont situés à une distance « E » l'un par rapport à l'autre. Au sein de la description qui suit, le terme « entraxe » est utilisé pour faire référence à la distance dudit axe de rotation de deux rangées adjacentes. La distance entre deux panneaux photovoltaïques adjacents 3 est indiquée à l'aide de la référence « D ». Pour obtenir une performance optimale des panneaux photovoltaïques 3 et éviter que lesdits panneaux photovoltaïques 3 d'une rangée se trouvent dans l'ombre d'une rangée de panneaux photovoltaïques 3 adjacente, le ratio « R », qui est le rapport entre l'entraxe et la longueur « L » desdits panneaux photovoltaïques 3, doit être compris entre 2 et 3, de préférence entre 2 et 2,5, préférablement entre 2,15 et 2,25. Le maintien dudit ratio « R » permet une performance optimale desdits panneaux photovoltaïques 3.

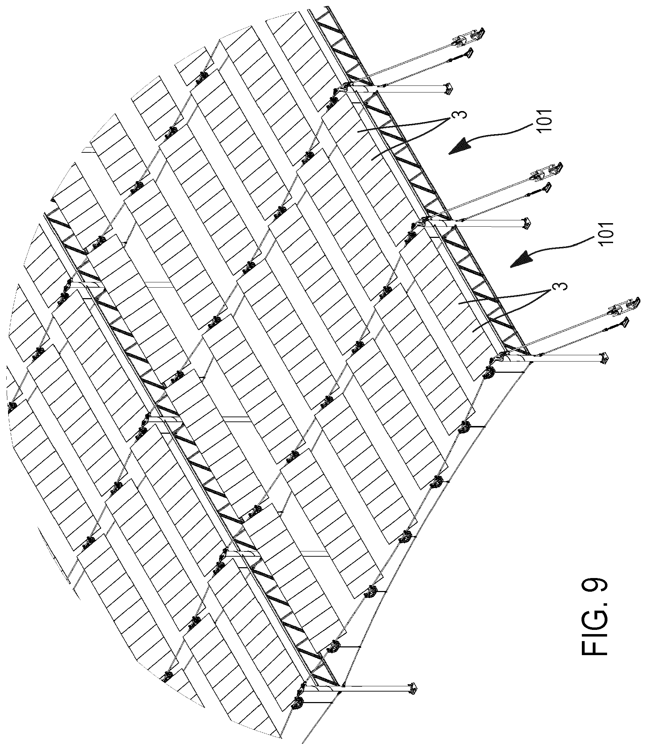

La figure 9 représente un ensemble de systèmes 101 de panneaux photovoltaïques 3 disposés les uns à proximité des autres. Lesdits systèmes 101 sont identiques à ceux déjà présentés sur la figure 4. Un ensemble de systèmes 101 de panneaux photovoltaïques 3 permet de couvrir une surface relativement étendue permettant de produire de l'énergie électrique. Selon l'exemple illustré sur la figure 9, les panneaux photovoltaïques 3 d'un premier système 101 sont positionnés selon le même axe que les panneaux photovoltaïques 3 d'un deuxième système 101 adjacent. Ce système présente l'avantage selon lequel les panneaux photovoltaïques 3 peuvent être utilisés pour créer un abri permettant, par exemple, de protéger la végétation située au-dessous desdits panneaux photovoltaïques 3. Dans le cas où, comme décrit ci-dessus, des capteurs permettent de constater l'approche d'une forte précipitation, les panneaux photovoltaïques 3 peuvent être orientés dans une position horizontale afin de protéger la végétation.

L'ensemble représenté sur la figure 9 peut être utilisé avec des capteurs adaptés pour contrôler la sécheresse du sol au-dessous de l'ensemble. Si le sol est sec, les panneaux photovoltaïques 3, l'on peut pivoter lesdits panneaux photovoltaïques pour permettre à la précipitation d'humidifier le sol. En revanche, si le sol est trop humide, l'on peut pivoter les panneaux photovoltaïques de façon à ce qu'ils le protègent d'un surplus d'humidité.

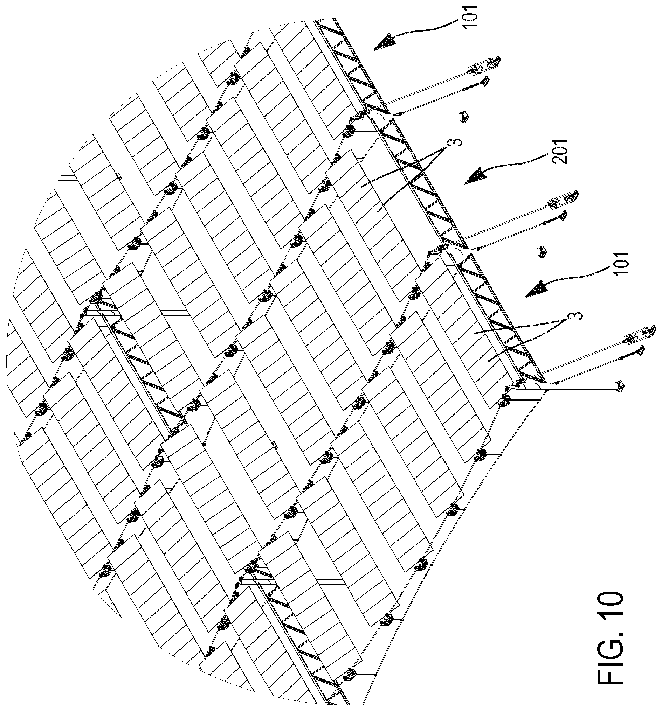

La figure 10 illustre un mode de réalisation alternatif d'un système de panneaux photovoltaïques 3, pourvu de systèmes 101 fonctionnant en alternance avec des systèmes 201. Cela signifie que les rangées de panneaux photovoltaïques 3 sont installées de façon décalée, les unes par rapport aux autres, offrant l'avantage de permettre un ombrage / ensoleillement plus homogène sur le sol, au-dessous des panneaux photovoltaïques, et ce de façon mieux répartie tout au long de la journée.

## Revendications

1. Système de panneaux photovoltaïques (1, 101) disposés au-dessus d'un support (2) selon une inclinaison déterminée par rapport au support (2), le système (1, 101) comprenant des poteaux de support (4) fixés sur ledit support (2), des câbles porteurs (5) suspendus entre les poteaux de support (4) et des moyens de fixation pour fixer les panneaux photovoltaïques (3) aux câbles porteurs (5), lesdits moyens de fixation comprenant des éléments de support (7), tels que des poutres, assemblés mobiles en rotation par rapport aux câbles porteurs (5), le système (1, 101) comprenant des moyens d'entraînement pour faire tourner les éléments de support (7) par rapport aux câbles porteurs (5) afin de modifier l'inclinaison des panneaux photovoltaïques (3) par rapport au support (2), **caractérisé en ce que** chaque élément de support (7) est fixé à un câble porteur (5) au moyen d'un élément de fixation (8, 109, 110, 112, 114, 116, 118) comprenant une première partie (81, 282) adaptée pour être fixée au câble porteur (5) et une deuxième partie (82, 283) adaptée pour être assemblée mobile en rotation par rapport à la première partie (81, 282), dans lequel l'élément de fixation (8, 109, 110, 112, 114, 116, 118) comprend un mécanisme d'entraînement, tel qu'un moteur électrique, pour permettre à la deuxième partie (82, 283) dudit élément de fixation (8, 109, 110, 112, 114, 116, 118) de tourner par rapport à la première partie (81, 282).

2. Système (1, 101) selon la revendication 1, dans lequel ladite deuxième partie (82, 283) de l'élément de fixation (8, 109, 110, 112, 114, 116, 118) fournit au moins un siège pour l'extrémité de l'élément de support (7), ledit siège étant adapté pour fixer ladite extrémité dudit élément de support (7)

3. Système selon la revendication 1 ou 2, dans lequel le système (1, 101) comprend au moins un câble tendeur (51), positionné à distance et essentiellement parallèle au câble porteur (5), le système comprenant au moins un raidisseur (52) adapté pour connecter l'élément de fixation (8, 109, 110, 112, 114, 116, 118) audit au moins un câble tendeur (51), pour ainsi rigidifier la structure.

4. Système (1, 101) selon la revendication 3, dans lequel l'au moins un raidisseur (52) s'étend essentiellement de façon perpendiculaire par rapport aux éléments de support (7).

5. Système (1, 101) selon l'une des revendications précédentes, dans lequel les panneaux photovoltaïques (3) comprennent des panneaux photovoltaïques (3) à double face.

6. Système (1, 101) selon l'une des revendications précédentes, dans lequel le système (1) est adapté pour positionner les panneaux photovoltaïques (3) à une hauteur déterminée par rapport au support (2), la hauteur déterminée étant comprise entre 2 et 10 mètres, de préférence entre 3 et 8 mètres, avec plus de préférence entre 5 et 7,5 mètres.

7. Système (1, 101) selon l'une des revendications précédentes, dans lequel les panneaux photovoltaïques (3) sont fixés sur les éléments de support (7) pour former des rangées de panneaux photovoltaïques (3), chaque rangée de panneaux photovoltaïques (3) comprenant au moins deux panneaux photovoltaïques (3).

8. Système (1, 101) selon la revendication 7, dans lequel le ratio (R) entre la distance (E) entre deux rangées adjacentes et la longueur (L) des panneaux photovoltaïques (3) dans les rangées est comprise entre 2 et 3, préférablement entre 2 et 2,5 avec plus de préférence entre 2,15 et 2,25.

9. Système (1, 101) selon l'une des revendications précédentes, dans lequel le système (1, 101) comprend un dispositif de contrôle adapté pour contrôler les moyens d'entraînement, comprenant, de façon optionnelle, un ordinateur.

10. Système (1, 101) selon la revendication 9, dans lequel le dispositif de contrôle comprend un module météorologique comprenant au moins un capteur pour collecter des paramètres météorologiques.

11. Système (1, 101) selon l'une des revendications précédentes, dans lequel le système comprend un revêtement adapté pour recouvrir le support au-dessus duquel le système (1, 101) est fixé, le revêtement étant adapté pour augmenter la réflexion du rayonnement solaire sur le support (2).

12. Système (1, 101) selon l'une des revendications précédentes, le système comprenant un écran adapté pour recouvrir au moins une partie de la surface délimitée par un ensemble d'au moins deux poteaux de support (4) adjacents.

13. Ombrière photovoltaïque comprenant le système (1, 101) selon l'une des revendications précédentes.

## Patentansprüche

1. Ein System von Photovoltaikpaneelen (1, 101), die über einem Träger (2) in einer bestimmten Neigung in Bezug auf den Träger (2) angeordnet sind, wobei das System (1, 101) Trägerpfosten (4), die an dem Träger (2) befestigt sind, Tragseile (5), die zwischen den Trägerpfosten (4) aufgehängt sind, und Befestigungsmittel zum Befestigen der Photovoltaikpaneele (3) an den Tragseilen (5) beinhaltet, wobei die Befestigungsmittel Trägerelemente (7), wie etwa Balken, beinhalten, die in Bezug auf die Tragseile (5) beweglich rotierbar angebracht sind, wobei das System (1, 101) Antriebsmittel beinhaltet, um die Trägerelemente (7) in Bezug auf die Tragseile (5) zu drehen, um die Neigung der Photovoltaikpaneele (3) in Bezug auf den Träger (2) zu verändern, **dadurch gekennzeichnet, dass** jedes Trägerelement (7) an einem Tragseil (5) mittels eines Befestigungselements (8, 109, 110, 112, 114, 116, 118) befestigt ist, das einen ersten Teil (81, 282), der angepasst ist, um an dem Tragseil (5) befestigt zu werden, und einen zweiten Teil (82, 283), der angepasst ist, um in Bezug auf den ersten Teil (81, 282) beweglich rotierbar angebracht zu werden, beinhaltet, wobei das Befestigungselement (8, 109, 110, 112, 114, 116, 118) einen Antriebsmechanismus, wie etwa einen Elektromotor, beinhaltet, um es dem zweiten Teil (82, 283) des Befestigungselements (8, 109, 110, 112, 114, 116, 118) zu ermöglichen, sich in Bezug auf den ersten Teil (81, 282) zu drehen.

2. System (1, 101) gemäß Anspruch 1, wobei der zweite Teil (82, 283) des Befestigungselements (8, 109, 110, 112, 114, 116, 118) dem Ende des Trägerelements (7) mindestens einen Sitz bereitstellt, wobei der Sitz angepasst ist, um das Ende des Trägerelements (7) zu befestigen.

3. System gemäß Anspruch 1 oder 2, wobei das System (1, 101) mindestens ein Spannseil (51) beinhaltet, das in einem Abstand und im Wesentlichen parallel zu dem Tragseil (5) positioniert ist, wobei das System mindestens eine Versteifung (52) beinhaltet, die angepasst ist, um das Befestigungselement (8, 109, 110, 112, 114, 116, 118) mit dem mindestens einen Spannseil (51) zu verbinden, um dadurch die Struktur zu versteifen.

4. System (1, 101) gemäß Anspruch 3, wobei sich die mindestens eine Versteifung (52) im Wesentlichen senkrecht in Bezug auf die Trägerelemente (7) erstreckt.

5. System (1, 101) gemäß einem der vorhergehenden Ansprüche, wobei die Photovoltaikpaneele (3) doppelseitige Photovoltaikpaneele (3) beinhalten.

6. System (1, 101) gemäß einem der vorhergehenden Ansprüche, wobei das System (1) angepasst ist, um die Photovoltaikpaneele (3) in einer bestimmten Höhe in Bezug auf den Träger (2) zu positionieren, wobei die bestimmte Höhe zwischen 2 und 10 Metern, bevorzugt zwischen 3 und 8 Metern, besonders bevorzugt zwischen 5 und 7,5 Metern, liegt.

7. System (1, 101) gemäß einem der vorhergehenden Ansprüche, wobei die Photovoltaikpaneele (3) an den Trägerelementen (7) befestigt sind, um Reihen von Photovoltaikpaneelen (3) zu bilden, wobei jede Reihe von Photovoltaikpaneelen (3) mindestens zwei Photovoltaikpaneele (3) beinhaltet.

8. System (1, 101) gemäß Anspruch 7, wobei das Verhältnis (R) zwischen dem Abstand (E) zwischen zwei benachbarten Reihen und der Länge (L) der Photovoltaikpaneele (3) in den Reihen zwischen 2 und 3, vorzugsweise zwischen 2 und 2,5, besonders bevorzugt zwischen 2,15 und 2,25, liegt.

9. System (1, 101) gemäß einem der vorhergehenden Ansprüche, wobei das System (1, 101) eine Steuervorrichtung beinhaltet, die angepasst ist, um die Antriebsmittel zu steuern und optional einen Computer beinhaltet.

10. System (1, 101) gemäß Anspruch 9, wobei die Steuervorrichtung ein Wettermodul beinhaltet, das mindestens einen Sensor zum Sammeln von Wetterparametern beinhaltet.

11. System (1, 101) gemäß einem der vorhergehenden Ansprüche, wobei das System einen Belag beinhaltet, der angepasst ist, um den Träger, über dem das System (1, 101) befestigt ist, zu bedecken, wobei der Belag angepasst ist, um die Reflexion der Sonnenstrahlung auf dem Träger (2) zu steigern.

12. System (1, 101) gemäß einem der vorhergehenden Ansprüche, wobei das System eine Abschirmung beinhaltet, die angepasst ist, um mindestens einen Teil der Fläche zu bedecken, die von einem Satz von mindestens zwei benachbarten Trägerpfosten (4) begrenzt wird.

13. Ein Photovoltaik-Schattendach, das das System (1, 101) gemäß einem der vorhergehenden Ansprüche beinhaltet.

## Claims

1. A system of photovoltaic panels (1, 101) arranged above a support (2) at a determined inclination relative to the support (2), the system (1, 101) comprising support posts (4) fixed onto said support (2), bearing cables (5) suspended between the support posts (4) and fixing means for fixing the photovoltaic panels (3) to the bearing cables (5), said fixing means comprising support members (7), such as beams, which are assembled in a rotationally mobile manner relative to the bearing cables (5), the system (1, 101) comprising driving means for turning the support members (7) relative to the bearing cables (5) in order to change the inclination of the photovoltaic panels (3) relative to the support (2), **characterised in that** each support member (7) is fixed to a bearing cable (5) by means a fixing member (8, 109, 110, 112, 114, 116, 118) comprising a first part (81, 282) designed to be fixed to the bearing cable (5) and a second part (82, 283) designed to be assembled in a rotationally mobile manner relative to the first part (81, 282), wherein the fixing member (8, 109, 110, 112, 114, 116, 118) comprises a driving mechanism, such as an electric motor, to allow the second part (82, 283) of said fixing member (8, 109, 110, 112, 114, 116, 118) to turn relative to the first part (81, 282).

2. The system (1, 101) according to claim 1, wherein said second part (82, 283) of the fixing member (8, 109, 110, 112, 114, 116, 118) provides at least one seat for the end of the support member (7), said seat being designed to fix said end of said support member (7).

3. The system according to claim 1 or 2, wherein the system (1, 101) comprises at least one tensioning cable (51), positioned at a distance and essentially parallel to the bearing cable (5), the system comprising at least one stiffener (52) designed to connect the fixing member (8, 109, 110, 112, 114, 116, 118) to said at least one tensioning cable (51), in order to thus stiffen the structure.

4. The system (1, 101) according to claim 3, wherein the at least one stiffener (52) extends essentially perpendicularly relative to the supporting members (7).

5. The system (1, 101) according to one of the preceding claims, wherein the photovoltaic panels (3) comprise double-sided photovoltaic panels (3).

6. The system (1, 101) according to one of the preceding claims, wherein the system (1) is designed to position the photovoltaic panels (3) at a determined height relative to the support (2), the determined height being between 2 and 10 metres, preferably between 3 and 8 metres, more preferably between 5 and 7.5 metres.

7. The system (1, 101) according to one of the preceding claims, wherein the photovoltaic panels (3) are fixed on the support members (7) to form rows of photovoltaic panels (3), each row of photovoltaic panels (3) comprising at least two photovoltaic panels (3).

8. The system (1, 101) according to claim 7, wherein the ratio (R) between the distance (E) between two adjacent rows and the length (L) of the photovoltaic panels (3) in the rows is between 2 and 3, preferably between 2 and 2.5, more preferably between 2.15 and 2.25.

9. The system (1, 101) according to one of the preceding claims, wherein the system (1, 101) comprises a control device designed to control the driving means, comprising, optionally, a computer.

10. The system (1, 101) according to claim 9, wherein the control device comprises a meteorological module comprising at least one sensor for collecting meteorological parameters.

11. The system (1, 101) according to one of the preceding claims, wherein the system comprises a coating designed to cover the support above which the system (1, 101) is fixed, the coating being designed to increase the solar radiation reflection on the support (2).

12. The system (1, 101) according to one of the preceding claims, the system comprising a screen designed to cover at least a part of the surface delimited by an assembly of at least two adjacent support posts (4).

13. A photovoltaic canopy comprising the system (1, 101) according to one of the preceding claims.
